(19) Europäisches Patentamt / European Patent Office / Office européen des brevets

(11) **EP 2 881 163 A1**

(12) **EUROPEAN PATENT APPLICATION**

(43) Date of publication:
**10.06.2015 Bulletin 2015/24**

(51) Int Cl.:
**B01D 69/12** *(2006.01)* **B01D 69/14** *(2006.01)*
**B01D 71/40** *(2006.01)*

(21) Application number: **13195908.2**

(22) Date of filing: **05.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Gambro Lundia AB**
**220 10 Lund (SE)**

(72) Inventors:
• **Dutczak, Szymon**
**72379 Hechingen (DE)**

• **Boschetti-De-Fierro, Adriana**
**72379 Hechingen (DE)**
• **Krause, Bernd**
**72414 Rangendingen (DE)**
• **Hornung, Markus**
**72147 Nehren (DE)**
• **Martinez Merizalde, Andres David**
**85354 Freising (DE)**

(74) Representative: **Perchenek, Nils**
**Gambro Dialysatoren GmbH**
**Legal and Intellectual Property**
**Holger Crafoord-Strasse 26**
**72379 Hechingen (DE)**

(54) **Composite membrane**

(57) The invention relates to a composite membrane comprising a porous support structure and a hydrophilic polymer forming a porous framework within the pore space of the support structure and a method for the production of the composite membrane. The composite membrane can be used in many processes in the biopharmaceutical industry, e.g., virus removal from liquids, protein separation, or selective adsorption.

Fig. 1

**Description**

**Technical Field**

The invention relates to a composite membrane comprising a microporous support structure and a hydrophilic polymer forming a porous framework within the pore space of the support structure and a method for the production of the composite membrane. The composite membrane can be used in many processes in the biopharmaceutical industry, e.g., virus removal from liquids, protein separation, or selective adsorption.

**Background of the Invention**

Membrane manufacturing processes are often based on the phase inversion process. In this process, a membrane is formed by inducing the separation of the polymer phase from either a solution or a molten state through interaction with a non-solvent or through decreasing the temperature. As the phase inversion process is kinetically governed, there are limitations in the pore sizes as well as in the chemical and physical properties of the membrane surface that can be achieved with a given polymer system. This affects membrane separation performance (separation by size exclusion) as well as absorption properties (chemical and physical interactions of the medium and the membrane surface).

In order to adjust surface properties, membranes may be modified after production. Membrane post-functionalization techniques often allow for adding functionalities to the membrane surface, and to some extent also to the inner surface of the pores. However, membrane post-functionalization techniques generally only have an effect inside the pores if performed using small molecules. This limits the modification to the addition of small functional moieties.

**Summary of the Invention**

The present disclosure provides a composite membrane comprising a microporous polymeric support structure and a hydrophilic polymer forming a porous framework within the pore space of the support structure.

The composite membrane can be used in many processes in the biopharmaceutical industry, e.g., virus removal from liquids, protein separation, or selective adsorption. In one embodiment, the membrane shows high passage of Mab feed solution (sieving coefficient for IgG $\approx$ 1), high feed flux (which results in a high feed capacity for this type of membrane), low protein adsorption and low fouling, which ensures a stable high filtration rate over time. In another embodiment, the membrane shows selective adsorption for endotoxins, or for certain proteins.

The present disclosure also provides methods for production of the composite membrane and devices comprising the composite membrane.

**Detailed Description of the Invention**

It has been found that a composite membrane comprising a microporous polymeric support structure and a hydrophilic polymer forming a porous framework within the pore space of the support structure shows improved filtration properties and has high mechanical stability.

The microporous polymeric support structure can have any suitable geometry according to the needs of the intended use, e.g. it can take the form of a flat sheet, a hollow fiber, or be shaped to form chambers or other geometries needed. In one embodiment of the invention, the microporous polymeric support structure is a hollow fiber membrane. In another embodiment of the invention, the microporous polymeric support structure is a flat sheet membrane.

The material of the microporous polymeric support structure is not particularly limited. Generally, the support structure is comprised of synthetic polymers. Examples of suitable synthetic polymers include polyolefins like polyethylene (PE) or polypropylene (PP); cycloolefin copolymers (COC); polyvinylidene fluoride (PVDF); polytetrafluoroethylene (PTFE); polycarbonates (PC); polyesters like PET; polysulfones (PSf); polyethersulfones (PES); polyacrylonitriles (PAN); poly(meth)acrylates like PMMA; polyamides (PA); polyetherimides (PEI); thermoplastic polyurethane (TPU); and copolymers and blends of the individual polymers. In one embodiment of the invention, the microporous polymeric support structure is comprised of thermoplastic polyurethane. In another embodiment, the microporous polymeric support structure is comprised of polypropylene. In still another embodiment, the microporous polymeric support structure is comprised of a blend of polyethersulfone and polyvinylpyrrolidone.

The pore structure and pore dimensions of the microporous polymeric support structure also can vary over a wide range. In one embodiment, the support structure has a lamellar constitution. In another embodiment, the support structure forms a three-dimensional network having a sponge structure. In still another embodiment, the support structure forms a three-dimensional network having a finger structure comprising macroscopic voids. The pore structure of the support can be uniform or asymmetric. The polymeric support structure is microporous, i.e. average pore diameter of the support structure is in the range of from 0.1 $\mu$m to 0.7 $\mu$m, for instance from 0.2 $\mu$m to 0.4 $\mu$m.

In the composite membrane of the invention, the pore space of the microporous polymeric support structure is filled with a hydrophilic polymer which forms a porous framework within the pore space of the support. In one embodiment of the invention, this porous framework has a sponge-like structure. In one embodiment of the invention, the sponge-like structure is substantially uniform and free of vacuoles (empty spaces included in the sponge-like structure and having a largest dimension of more than about 5 microns).

The composite membrane of the invention is prepared by forming the porous framework of the hydrophilic polymer within the microporous polymeric support structure, filling the pore space of the support structure. In one embodiment of the invention, the porous framework of the hydrophilic polymer is formed in situ by radical polymerization of appropriate monomeric starting materials within the support structure.

Suitable monomers include ethylhexyl methacrylate (EHMA), butyl methacrylate (BMA), lauryl methacrylate (LMA), hexyl acrylate (HA), 2-acrylamide-2-methyl-propanesulfonic acid (AMPS), acrylamide (AAm), or N,N-dimethyl-N-methacryloyl-oxyethyl-N-(3-sulfopropyl ester) ammonium betaine. Suitable cross-linkers include pentaerythritol triacrylate (PETA), ethylene dimethacrylate, pentaerythritol diacrylate monostearate, trimethylolpropane trimethacrylate (TRIM), 2-methyl-1,8-octanediol dimethacrylate, 1,3-glycerol dimethacrylate, trimethylolpropane trimethacrylate (TMPTMA), ethylene dimethacrylate (EDMA), ethylene glycol dimethacrylate (EGDMA), 1,3-butanediol diacrylate (BDDA), N,N-methylene-bis(acrylamide) (MBA).

Suitable initiators include hydroxyphenylketones like 2-hydroxy-2-methylpropiophenone (Darocur® 1173); phosphine oxides like diphenyl (2,4,6 trimethylbenzoyl)phosphine oxide or phenyl bis(2,4,6-trimethylbenzoyl)phosphine oxide; aminophenylketones like 2-benzyl-2-(dimethylamino)-4'-mor-pholinobutyrophenone (Irgacure® 369); acetophenones like 2,2-dimethoxy-2-phenylacetophenone (DMPA); and quinones like anthraquinone-2-sulfonic acid sodium salt monohydrate; 2-tert-butylanthraquinone, camphor quinone, 9,10-phenan-threnequinone. Further examples of suitable initiators include cationic photoinitiators; benzil and benzoin compounds; benzophenone; thioxanthones; 2,2-azobis(isobutyro-nitrile) (AIBN); and benzoyl peroxide (BPO).

In the preparation of the hydrophilic polymer, a solvent or solvent system is used which is able to dissolve the monomers but does neither dissolve the hydrophilic polymer nor the microporous polymeric support structure. Depending on the material of the support structure, suitable solvents comprise water, methanol, 2-methyl-1-propanol, tetrahydrofuran, formamide, heptanol, octanol, nonanol, decanol, dodecanol, heptane, toluene, mesitylene, acetonitrile, polyethylene glycol, and super-critical carbon dioxide. Suitable solvent systems include mixtures of dimethyl sulfoxide with 2-heptanol or dodecanol; mixtures of toluene with alcohols like propanol, octanol, nonanol, decanol, undecanol, or dodecanol; mixtures of mesitylene with nonanol or decanol; mixtures of cyclohexanol with dodecanol, ethylene glycol, or 1,4-butanediol; mixtures of methanol with water, tetrahydrofuran, or dodecanol; mixtures of 1,4-butanediol with propanol, dimethyl formamide, or 3-methyl-1-propanol; mixtures of dodecanol with heptane, polyethylene glycol, or dichloromethane; mixtures of propanol with formamide; mixtures of tert.-butanol with 1,4-butanediol; and mixtures of dodecanol with tetrahydrofuran.

In one embodiment of the invention, the porous framework of the hydrophilic polymer within the microporous polymeric support structure is produced using a precursor solution comprising HEMA as monomer, PETA as cross-linker, a mixture of cyclohexanol and dodecanol as solvent system, and 2-hydroxy-2-methylpropiophenone (Darocur® 1173) as polymerization initiator.

One advantage of the present invention is that pore size within the porous framework of the hydrophilic polymer can be easily controlled, so that membranes having a very narrow pore size distribution can be obtained; a feature particularly important for virus removal membranes.

Another advantage of the present invention is that membranes with similar pore size and properties can be obtained in different shapes, e.g., as flat sheet membranes or hollow fiber membranes, using the same composition of the precursor solution and similar process conditions. Membranes prepared via a phase inversion process usually cannot be produced in both shapes without significant changes in the production process.

Still another advantage of the present invention is that the chemical properties of the hydrophilic polymer can be easily tailored by simply varying monomers in the precursor solution, allowing for, e.g., adjustment of the adsorptive properties of the membrane.

The concentration of the monomeric starting materials in the solution has to be sufficiently high in order to obtain a porous framework which fills the pore space of the support structure. The total concentration of the starting materials, i.e., the sum of the concentrations of monomers, cross-linkers, and initiators, in the solution generally is in the range of from 10 to 90 wt.-%, relative to the total weight of the solution.

The concentration of the monomer in the solution generally is in the range of from 10 to 90 wt.-%, for instance, 20 to 80 wt.-%, relative to the total weight of the solution. In one embodiment, the concentration of the monomer in the solution is 30 to 50 wt.-%, relative to the total weight of the solution.

The concentration of the cross-linker in the solution generally is in the range of from 10 to 90 wt.-%, for instance, 20 to 80 wt.-%, relative to the total weight of the solution. In one embodiment, the concentration of the cross-linker in the solution is 10 to 25 wt.-%, relative to the total weight of the solution.

The amount of the polymerization initiator in the solution generally is in the range of from 0.1 to 10 wt.-%, relative to the total amount of monomer.

The polymerization reaction generally is conducted at a temperature in the range of from 10°C to 160°C. In one embodiment, the polymerization reaction is conducted at room temperature. Preferably, the polymerization is conducted under an inert atmosphere free from oxygen; e.g., under nitrogen or a noble gas atmosphere.

Depending on the initiator used, the polymerization reaction can be triggered by heat, UV irradiation, or irradiation with visible light.

Various types of support structure can be used in the composite membranes. Suitable examples include flat sheet membranes, pleated membranes, tubular membranes, and hollow fiber membranes.

In a specific embodiment of the present invention, the composite membrane is a hollow fiber membrane. A hollow fiber membrane of the invention is further characterized by having an inner diameter of from 50 to 2,000 $\mu$m, preferably of from 50 to 1,000 $\mu$m, and more preferably from 100 to 500 $\mu$m. The wall thickness is generally from 3% to 30% of the external diameter, i.e. generally from 5 to 200 $\mu$m, preferably from 10 to 80 $\mu$m, and more preferably from 20 to 70 $\mu$m.

In another specific embodiment of the present invention, the composite membrane is a flat sheet membrane. The thickness of a flat sheet membrane according to the invention may vary between 10 $\mu$m and 200 $\mu$m. A thickness of 20 $\mu$m to 100 $\mu$m may be especially advantageous for most applications. Several flat sheet membranes may be combined in the form of a stack to form a module.

The hydraulic permeability of the membranes of the invention, measured at 37 °C, generally is in the range of from $1 \cdot 10^{-4}$ to $500 \cdot 10^{-4}$ cm$^3$/(cm$^2$·bar·sec), for instance from $15 \cdot 10^{-4}$ to $250 \cdot 10^{-4}$ cm$^3$/(cm$^2$·bar·sec).

In one embodiment, the membranes of the invention have a sieving coefficient for IgG in aqueous solution of at least 0.8, e.g. at least 0.9, and in particular 1.0. In one embodiment, the membranes of the invention also show a sieving coefficient of 1.0 for albumin.

In one embodiment, the membranes of the invention show retention of gold nano-particles having a diameter of 20 nm (simulating porcine parvovirus) of more than 90%.

In one embodiment of the present invention, the composite membrane has a hydraulic permeability of from $10 \cdot 10^{-4}$ to $500 \cdot 10^{-4}$ cm$^3$/(cm$^2$·bar·sec), preferably of from $15 \cdot 10^{-4}$ to $250 \cdot 10^{-4}$ cm$^3$/(cm$^2$·bar·sec), and a sieving coefficient for IgG of greater than 0.8.

A further aspect of the present invention is a device comprising a membrane of the invention. The membrane used in the device can take the form of a sheet or a plurality of sheets, e.g. a stack of planar membranes. Alternatively, the membrane used in the device can take the form of a hollow fiber or a plurality of hollow fibers, e.g. a bundle of hollow fiber membranes. Suitable sheets and fibers, respectively, their properties and preparation have been described above.

In one embodiment of the device, the membrane forms an interface between two fluid compartments of the device.

An exemplary device comprises two compartments separated by a semipermeable membrane mounted in a casing, a first internal compartment fitted with two accesses and a second external compartment comprising one or two accesses, both compartments being also separated by a potting compound, based on an appropriate adhesive compound, intended for forming as applicable (i) a cylindrical partition separating both compartments of said device containing a semipermeable membrane of the hollow fiber bundle type as defined above or (ii) a tight seal in said device including a semipermeable membrane of the sheet membrane type as defined above.

Another exemplary device comprises a plurality of hollow fiber membranes, contained within an outer shell, and configured so that fluid within a space external to the hollow fibers (i.e., an extracapillary compartment) is segregated from fluid passing through the hollow fibers and their corresponding orifices. Additionally, the device includes two manifold end chambers within the outer shell on opposite ends of the device. Each of the two orifices of the lumen of a hollow fiber connects to a different end chamber. The end chambers and the extracapillary compartment are separated by the semipermeable membranes of the hollow fibers.

The membrane, the method, and the device of the invention can advantageously be used in many processes in the biopharmaceutical industry which require selective removal of substances, e.g., virus particles, endotoxins or proteins, from a liquid by filtration or selective adsorption.

A further aspect of the invention is a method of removing substances from a liquid, comprising filtration of the liquid through a composite membrane of the invention. In one embodiment of the invention, the filtration is normal-flow filtration (NFF). In another embodiment of the invention, the filtration is tangential-flow filtration (TFF).

**Examples**

**Methods**

Preparation of mini-modules

Mini-modules [= fiber bundles in a housing] are prepared by putting the fiber bundle in the mini-module housing and cutting them to a defined length of 20 cm. Then, the ends of the fibers are closed with a melting device. Then, the ends of the fiber bundle are potted with polyurethane. Subsequently, the ends of the fibers are cut open. The mini-modules ensure protection of the fibers.

The number of fibers required is calculated for an effective surface A of 10 cm$^2$ according to equation (1)

$$A = \pi \text{ x } d_i \text{ x } l \text{ x } n \text{ } [cm^2] \hspace{3cm} (1)$$

with

$d_i$ = inner diameter of fiber [cm]

n = amount of fibers

l = effective fiber length [cm]

Hydraulic Permeability (Lp) of mini-modules

The hydraulic permeability of a membrane bundle is determined by pressing an exact defined volume of water under pressure through the membrane bundle, which has been sealed on one side, and measuring the required time. The hydraulic permeability can be calculated from the determined time, the effective membrane surface area, the applied pressure and the volume of water pressed through the membrane. From the number of fibers, the fiber length as well as the inner diameter of the fiber, the effective membrane surface area is calculated. The membrane bundle has to be wetted thirty minutes before the Lp-test is performed. For this purpose, the membrane bundle is put in a box containing 500 ml of ultrapure water. After 30 minutes, the membrane bundle is transferred into the testing system. The testing system consists of a water bath that is maintained at 37 °C and a device where the membrane bundle can be implemented mechanically. The filling height of the water bath has to ensure that the membrane bundle is located underneath the water surface in the designated device. To avoid that a leakage of the membrane leads to a wrong test result, an integrity test of the membrane bundle and the test system has to be carried out in advance. The integrity test is performed by pressing air through the membrane bundle that is closed on one side of the bundle. Air bubbles indicate a leakage of the membrane bundle or the test device. It has to be checked if the leakage can be associated with the wrong implementation of the membrane bundle in the test device or if a real membrane leakage is present. The membrane bundle has to be discarded if a leakage of the membrane is detected. The applied pressure of the integrity test has to be at least the same value as the applied pressure during the determination of the hydraulic permeability in order to ensure, that no leakage can occur during the measurement of the hydraulic permeability because of a too high applied pressure.

Sieving coefficient of IgG in aqueous solution

The sieving coefficient of IgG is determined by dead-end filtration of a solution of 2,5 g/l IgG in PBS buffer.

- The module is first washed with distilled water (10 ml at a flow rate of 0.04 to 1.5 ml/min).

- Then 100 ml of the IgG solution are filtered through the module at a flow rate of 0.7 ml/min.

- A sample of the ultrafiltrate is collected every 15 minutes and analyzed for IgG content using the UF-EW method.

- Overall filtration time is 2.5 hours.

Gold particle retention (GPR)

The module is flushed with distilled water and a volume of 30 mL distilled water is used. With the first 10 mL the blood side is flushed (flow adjusted for a pressure of 0.2-0.3 bar) and with the other 20 mL the filtrate side (dead-end filtration) is flushed. A flow is used that result in a pressure of 0.98 bar during the dead-end filtration procedure.

A solution comprising gold particles having a diameter of approximately 20 nm (Plano) is diluted the following: 100 mL of Plano solution is mixed with 203 mg of polyoxyethylene $\beta$-naphtylether and 1227 mg of poly(sodium 4-styrene-sulfonate homogeneously. The solution is put afterwards for 15 minutes in an ultrasonic bath. This solution is pumped through the mini-module at a flow rate of 0.35 ml/min.

The particle content in the feed and the filtrate is determined photometrically by measuring extinction at 530 nm, e.g. using an Ultrospec™ 3000 pro photometer.

The GPR value is calculated according to equation (4)

$$GPR = \log_{10}\left(\frac{A}{F}\right) \tag{4}$$

with

A    being the extinction of the feed solution;
F    being the extinction of the filtrate;

**Example 1** Hollow fiber - polymerization in a fiber bundle

Preparation of a precursor solution

In a beaker, 33.0g 1-dodecanol was liquefied in a water bath having a temperature of 40°C. Under constant agitation, 16.5g cyclohexanol, 33.6g HEMA, 16.8g PETA and 0.3g 2-Hydroxy-2-methylpropiophenone as photo initiator were added. The solution was stirred for 10 minutes and then purged with nitrogen for 30 minutes in order to remove oxygen. In order to prevent premature polymerization, the beaker was protected from daylight all the time.

**Table 1** Properties of microporous hollow fiber supports.

| Fiber type | PF 2000N | MIKRO-H-033 |
|---|---|---|
| Wall thickness ($\mu$m) | 150 | 50 |
| Inner diameter ($\mu$m) | 330 | 320 |
| Fiber material | Polypropylene (PP) | Polyethersulfone (PES) |
| Lp ($10^{-4}$ cm·bar$^{-1}$·s$^{-1}$) | ca. 2000 | ca. 1000 |

Membrane manufacturing

The precursor solution was injected through one end of PF 2000N fibers (characteristics see Table 1) potted in a mini module. The other end of the fibers was closed during this procedure in order to force all the injected solution through the walls of the fiber. After the impregnation step, the lumen of the fiber was purged with nitrogen to remove excess precursor solution. The mini modules with the impregnated fibers were placed under UV-irradiation for 10 minutes and left to polymerize. Afterwards, the fibers were washed overnight in a 50 wt.-% ethanol/water solution in order to remove solvents and unreacted polymers. The final membrane had an Lp of $4.7 \cdot 10^{-4}$ cm$^3$/(cm$^2$·bar·sec) and showed 93% retention of 20nm gold nanoparticles (GPR=1.14).

**Example 2** Hollow fiber - on line polymerization

Preparation of a precursor solution

In a beaker, 33.0g 1-dodecanol was liquefied in a water bath having a temperature of 40°C. Under constant agitation, 16.5g cyclohexanol, 33.6g HEMA, 16.8g PETA and 0.3g 2-Hydroxy-2-methylpropiophenone as photo initiator were added. The solution was stirred for 10 minutes and then purged with nitrogen for 30 minutes in order to remove oxygen. In order to prevent premature polymerization, the beaker was protected from daylight all the time.

Membrane manufacturing

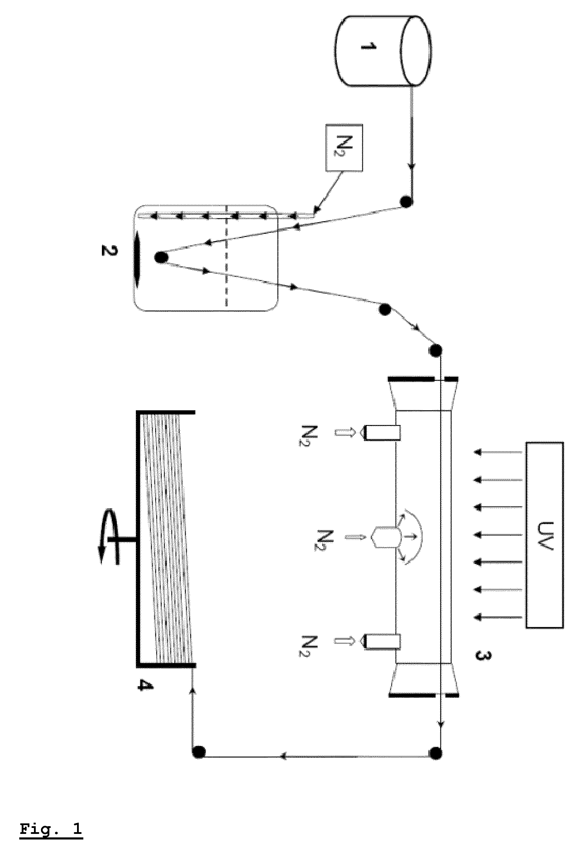

MIKRO-H-033 PAES fiber (characteristics see Table 1) wound on a spool was used as support structure for continuous polymerization. Figure 1 is a schematic representation of the continuous on line polymerization process used to prepare a composite membrane.

In this process, the support fiber was unwound from a spool 1, then immersed in a bath 2 of the precursor solution 2, irradiated with UV under nitrogen atmosphere in an irradiation chamber 3, and the composite membrane fiber was collected on a winding wheel 4. During the entire process, the precursor solution in the bath 2 is agitated and purged with nitrogen.

The composite membrane fiber was washed overnight in a 50 wt.-% ethanol/water solution in order to remove solvents and unreacted polymers. As a last step, the composite membrane fiber was potted into mini modules. The final hollow fiber membrane had an Lp of $13 \cdot 10^{-4}$ $cm^3/(cm^2 \cdot bar \cdot sec)$ and showed 43% retention of 20nm gold nanoparticles (GPR=0.24).

**Claims**

1.  A composite membrane comprising a microporous polymeric support structure and a hydrophilic polymer forming a porous framework within the pore space of the porous support structure.

2.  The composite membrane of claim 1, wherein the microporous polymeric support structure is comprised of a synthetic polymer selected from the group consisting of polyolefins; cycloolefin copolymers; polyvinylidene fluoride; polytetrafluoroethylene; polycarbonates; polyesters; polysulfones; polyethersulfones; polyacrylonitriles; poly-(meth)acrylates; polyamides; polyetherimides; thermoplastic polyurethanes; and copolymers and blends of the individual polymers.

3.  The composite membrane of claim 1 or 2, wherein the average pore diameter of the support structure is in the range of from 0.1 $\mu$m to 0.7 $\mu$m.

4.  The composite membrane of any one of claims 1 to 3, wherein the porous framework of a hydrophilic polymer is formed by polymerization of appropriate monomeric starting materials within the support structure.

5.  The composite membrane of any one of claims 1 to 4, wherein the monomeric starting materials comprise monomers selected from the group consisting of ethylhexyl methacrylate, butyl methacrylate, lauryl methacrylate, hexyl acrylate, 2-acrylamide-2-methyl-propanesulfonic acid, acrylamide, and N,N-dimethyl-N-methacryloyloxyethyl-N-(3-sulfopropyl ester) ammonium betaine.

6.  The composite membrane of any one of claims 1 to 5, wherein the monomeric starting materials comprise cross-linkers selected from the group consisting of pentaerythritol triacrylate, ethylene dimethacrylate, pentaerythritol diacrylate monostearate, trimethylolpropane trimethacrylate, 2-methyl-1,8-octanediol dimethacrylate, 1,3-glycerol dimethacrylate, trimethylolpropane trimethacrylate, ethylene dimethacrylate, ethylene glycol dimethacrylate, 1,3-butanediol diacrylate, and N,N-methylene-bis(acrylamide).

7.  A process for preparing the composite membrane of any one of claims 1 to 6, comprising forming a porous framework of the hydrophilic polymer within the pore space of the porous support structure.

8.  The process of claim 7, wherein the porous framework of the hydrophilic polymer is formed in situ by radical polymerization of appropriate monomeric starting materials within the support structure.

9.  The process of claim 8, wherein the monomeric starting materials comprise monomers selected from the group consisting of ethylhexyl methacrylate, butyl methacrylate, lauryl methacrylate, hexyl acrylate, 2-acrylamide-2-methylpropanesulfonic acid, acrylamide, and N,N-dimethyl-N-meth-acryloyloxyethyl-N-(3-sulfopropyl ester) ammonium betaine.

10. The process of claim 9, wherein the monomer is ethylhexyl methacrylate.

11. The process of any one of claims 8 to 10, wherein the monomeric starting materials comprise cross-linkers selected from the group consisting of pentaerythritol triacrylate, ethylene dimethacrylate, pentaerythritol diacrylate monostearate, trimethylolpropane trimethacrylate, 2-methyl-1,8-octanediol dimethacrylate, 1,3-glycerol dimethacrylate, trimethylolpropane trimethacrylate, ethylene dimethacrylate, ethylene glycol dimethacrylate, 1,3-butanediol diacrylate, and N,N-methylene-bis(acrylamide).

12. The process of claim 11, wherein the cross-linker is pentaerythritol triacrylate.

13. The process of any one of claims 8 to 12, wherein the porous framework of the hydrophilic polymer within the microporous polymeric support structure is produced using a precursor solution comprising at least one monomer, at least one cross-linker, at least one initiator, and at least one solvent for the monomer, cross-linker, and initiator.

14. A device comprising the composite membrane of any one of claims 1 to 6.

15. Use of the composite membrane of any one of claims 1 to 6 for selectively removing substances from a liquid by filtration of the liquid through the membrane.

Fig. 1

Europäisches
Patentamt

European
Patent Office

Office européen
des brevets

## EUROPEAN SEARCH REPORT

Application Number

EP 13 19 5908

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/073843 A1 (UNIV MCMASTER [CA]; CHILDS RONALD F [CA]; FILIPE CARLOS [CA]; GHOSH RA) 2 September 2004 (2004-09-02) * page 17 - page 18; claims 1,39,44-54; example 13; table 5 * | 1-15 | INV. B01D69/12 B01D69/14 B01D71/40 |
| X | HIDALGO ET AL: "Radiosynthesis of hydrogel confined to hollow-fiber membranes for the design of a bioartificial extra-corporeal liver", RADIATION PHYSICS AND CHEMISTRY, ELSEVIER SCIENCE PUBLISHERS BV, AMSTERDAM NL, vol. 76, no. 8-9, 24 May 2007 (2007-05-24) , pages 1419-1424, XP022094663, ISSN: 0969-806X, DOI: 10.1016/J.RADPHYSCHEM.2007.02.044 * page 1420 * | 1-11, 13-15 | |
| X | WO 2010/002501 A2 (3M INNOVATIVE PROPERTIES CO [US]; ZHOU JINSHENG [US]; HESTER JONATHAN) 7 January 2010 (2010-01-07) * the whole document * | 1-15 | TECHNICAL FIELDS SEARCHED (IPC) B01D |
| X | WO 2011/152967 A2 (3M INNOVATIVE PROPERTIES CO [US]; ZHOU JINSHENG [US]) 8 December 2011 (2011-12-08) * the whole document * | 1-15 | |
| X | US 2011/139717 A1 (MALENFANT PATRICK ROLAND LUCIEN [US] ET AL) 16 June 2011 (2011-06-16) * the whole document * | 1-4,6-8, 11,13-15 | |
| X | EP 2 545 985 A1 (GAMBRO LUNDIA AB [SE]) 16 January 2013 (2013-01-16) * the whole document * | 1,2,7, 14,15 | |

The present search report has been drawn up for all claims

| Place of search | Date of completion of the search | Examiner |
|---|---|---|
| Munich | 13 February 2014 | Marti, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 5908

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2014

| Patent document cited in search report | | Publication date | Patent family member(s) | | Publication date |
|---|---|---|---|---|---|
| WO 2004073843 | A1 | 02-09-2004 | AT | 448866 T | 15-12-2009 |
| | | | AU | 2004212641 A1 | 02-09-2004 |
| | | | AU | 2009230738 A1 | 12-11-2009 |
| | | | CA | 2514471 A1 | 02-09-2004 |
| | | | EP | 1617936 A1 | 25-01-2006 |
| | | | EP | 2143481 A1 | 13-01-2010 |
| | | | EP | 2143482 A1 | 13-01-2010 |
| | | | JP | 5189286 B2 | 24-04-2013 |
| | | | JP | 2006519273 A | 24-08-2006 |
| | | | JP | 2011149024 A | 04-08-2011 |
| | | | KR | 20050107440 A | 11-11-2005 |
| | | | US | 2004203149 A1 | 14-10-2004 |
| | | | US | 2008312416 A1 | 18-12-2008 |
| | | | US | 2008314831 A1 | 25-12-2008 |
| | | | US | 2009008328 A1 | 08-01-2009 |
| | | | US | 2009029438 A1 | 29-01-2009 |
| | | | US | 2009032463 A1 | 05-02-2009 |
| | | | US | 2009035552 A1 | 05-02-2009 |
| | | | US | 2010044316 A1 | 25-02-2010 |
| | | | US | 2010047551 A1 | 25-02-2010 |
| | | | WO | 2004073843 A1 | 02-09-2004 |
| WO 2010002501 | A2 | 07-01-2010 | CN | 102131566 A | 20-07-2011 |
| | | | EP | 2303437 A2 | 06-04-2011 |
| | | | JP | 2011527230 A | 27-10-2011 |
| | | | US | 2011091698 A1 | 21-04-2011 |
| | | | WO | 2010002501 A2 | 07-01-2010 |
| WO 2011152967 | A2 | 08-12-2011 | CN | 103108689 A | 15-05-2013 |
| | | | EP | 2576029 A2 | 10-04-2013 |
| | | | JP | 2013534464 A | 05-09-2013 |
| | | | KR | 20130080451 A | 12-07-2013 |
| | | | US | 2013109262 A1 | 02-05-2013 |
| | | | WO | 2011152967 A2 | 08-12-2011 |
| US 2011139717 | A1 | 16-06-2011 | CA | 2780819 A1 | 07-07-2011 |
| | | | EP | 2513142 A1 | 24-10-2012 |
| | | | JP | 2013513623 A | 22-04-2013 |
| | | | US | 2011139717 A1 | 16-06-2011 |
| | | | WO | 2011081898 A1 | 07-07-2011 |
| EP 2545985 | A1 | 16-01-2013 | EP | 2545985 A1 | 16-01-2013 |
| | | | WO | 2013010860 A1 | 24-01-2013 |

EPO FORM P0459

For more details about this annex : see Official Journal of the European Patent Office, No. 12/82